# EUROPEAN PATENT SPECIFICATION

(11) **EP 2 940 836 B1**
(45) Date of publication and mention of the grant of the patent: **19.04.2017**
(21) Application number: 13869836.0
(22) Date of filing: 18.12.2013
(51) Int. Cl.: H02K 5/22, H02K 1/18, H02K 21/16

(54) **ROTATING MACHINE**
ROTIERENDE MASCHINE
MACHINE ROTATIVE

(30) Priority: 28.12.2012 JP 2012288694
(43) Date of publication of application: 04.11.2015
(73) Proprietor: Panasonic Intellectual Property Management Co., Ltd., Osaka-shi, Osaka 540-6207 (JP)
(72) Inventor: TSURUOKA, Kouichirou, Osaka-shi, Osaka 540-6207 (JP); FUJII, Naoki, Osaka-shi, Osaka 540-6207 (JP); ASAKURA, Hiroaki, Fukui 915-0861 (JP); UNO, Tadashi, Fukui 915-0861 (JP); KAWABATA, Akihiro, Fukui 915-0861 (JP); TAKIMOTO, Tohru, Fukui 915-0861 (JP)
(74) Representative: Grünecker Patent- und Rechtsanwälte PartG mbB
(86) International application number: PCT/JP2013/007425
(87) International publication number: WO 2014/103247

(56) References cited:
- WO-A1-2009/028066
- WO-A1-2011/159674
- WO-A2-2008/066216
- JP-A- H04 368 445
- JP-A- 2002 153 032
- JP-U- H0 443 356
- US-A- 5 254 892

## Description

### Technical Field

The present invention relates to a rotating machine, e.g., a motor or a generator.

### Background Art

Techniques have been proposed for rotating machines. For example, Patent Literature 1 discloses a terminal structure for a dynamo-electric machine. The dynamo-electric machine has resin-molded coil ends that form resin-molded sections and terminal sections that are integrated with the resin-molded sections. The terminal section is provided on one of the resin-molded sections provided on two sides of a stator core formed by laminating electromagnetic steel plates. In the dynamo-electric machine, the terminal of the terminal section protrudes outward in a radial direction, at a position on the end face of the resin-molded section in the lamination direction of the electromagnetic steel plates.

### Citation List

### Patent Literature

Patent Literature 1: Japanese Patent Laid-Open No. 2010-75010

### Summary of Invention

### Technical Problem

Rotating machines such as a motor or a generator are installed on, for example, motor vehicles as well as home or industrial electrical appliances. In such a rotating machine, a stator includes a terminal (connection terminal) for connection to a lead wire connecting to an external device, e.g., a power supply, a battery, or a predetermined electric circuit. If the rotating machine is a motor, power supplied from a power supply passes through the lead wire and is inputted to the rotating machine through the terminal. If the rotating machine is a generator, power generated by the rotating machine is outputted from the terminal to the lead wire. The terminal thus provided on the rotating machine serves as a power input port or output port that is connected to the lead wire. Hence, the terminal may be exposed on the outer surface of the rotating machine. For example, if the terminal is provided so as to protrude in a predetermined direction from the outer surface of the rotating machine, the dimensions of the rotating machine are increased by an amount corresponding to the amount of protrusion. This may preclude a size reduction of the rotating machine.

In the connection of the terminal provided on the stator and the lead wire, a terminal paired with the stator terminal may be provided on the end of the lead wire near the terminal of the stator, and the terminal of the lead wire may be fit to the external connection part of the stator terminal. Alternatively, the above-described end of the lead wire may be joined (e.g. by soldering) to the external connection part of the stator terminal. The inventors also examined a terminal structure applicable to multiple methods of connecting stator terminals and lead wires.

An object of the present invention is to provide a rotating machine including a stator that can have a small structure.

### Solution to Problem

The present invention is a rotating machine including a rotatably provided rotor and a resin-molded stator, the stator including a stator core formed by laminating steel plates, a coil provided on the stator core, a terminal that is connected to a drawn-out wire section continuously connecting to the end of a conductor forming the coil and is connected to a lead wire, and a molded section that covers the coil end section of the coil near one end face of the stator core in the lamination direction of the laminated steel plates in the stator core, the terminal having a part connected near the one end face of the stator core to the drawn-out wire section included in the molded section, the terminal including an external connection part protruding from the molded section toward the rotating shaft of the rotor, the external connection part being connected to the lead wire.

With this configuration, the external connection part of the terminal is properly disposed on the inner periphery of the stator without protruding from the outer surface of the rotating machine, achieving the compact stator. "Rotating machine" is a concept including a motor or a generator. The rotating machine is connected to an external device (e.g., a power supply, a battery, or a predetermined electric circuit) via the lead wire.

In the rotating machine, the external connection part of the terminal may have a first hole section and a second hole section for the connection of the lead wire, the second hole section being wider than the first hole section in a predetermined direction with respect to the rotating shaft.

With this configuration, the single terminal is applicable to multiple connecting methods and lead wires having multiple diameters, achieving proper connection. As for a method of connecting the lead wire, the following are exemplified: a terminal paired with the terminal provided in the stator is provided on the end of the lead wire, and the terminal of the lead wire is fit into the external connection part; alternatively, the lead wire is joined to the stator terminal by soldering and so on.

### Advantageous Effect of Invention

The present invention can obtain a rotating machine including a stator that can have a small structure.

### Brief Description of Drawings

[FIG. 1] FIG. 1 is a plan view showing an example of a rotating machine.
[FIG. 2] FIG. 2 is a perspective view showing an example the rotating machine.
[FIG. 3] FIG. 3 is a perspective view showing an example of a stator core.
[FIG. 4] FIG. 4 shows an example of a connection diagram.
[FIG. 5] FIG. 5(A) is a perspective view showing an example of a connection structure, and FIG. 5(B) is a cross-sectional view taken along a position corresponding to a line I-I shown in FIG. 5(A) in a state in which the terminal of a lead wire is fit into an external connection part shown in FIG. 5(A).
[FIG. 6] FIG. 6(A) is a perspective view showing another example of the connection structure, and FIG. 6(B) is a cross-sectional view taken along a position corresponding to a line J-J shown in FIG. 6(A) in a state in which the terminal of the lead wire is fit into the external connection part shown in FIG. 6(A).

### Description of Embodiment

An embodiment for implementing the present invention will be described below in accordance with the accompanying drawings. The present invention is not limited to the following configurations and thus various configurations may be used under the same technical idea. For example, the following configurations may be partially omitted or replaced with other configurations. The present invention may include other configurations.

### <Rotating machine>

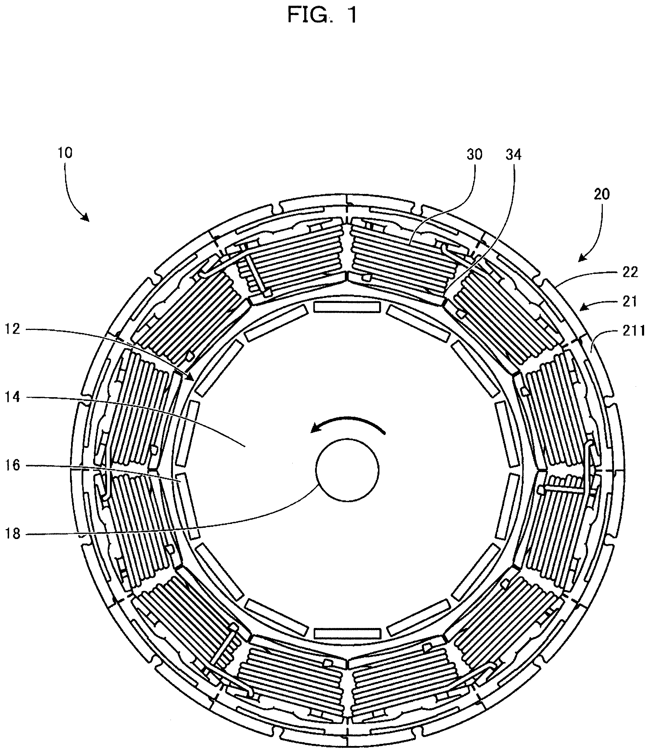

A rotating machine 10 is, for example, a motor or a generator. The rotating machine 10 such as a motor or a generator is installed on various products. For example, the rotating machine 10 is mounted on a motor vehicle. The motor vehicle is, for example, an electrical bicycle. If the rotating machine 10 is a motor, the rotating machine 10 is used as, for example, a power source for moving a motor vehicle. As shown in FIG. 1, the rotating machine 10 includes a rotor 12 and a stator 20. In the present embodiment, by way of example, the rotor 12 has fourteen poles while the stator 20 has twelve slots (see FIG. 1).

The rotor 12 includes a rotor core 14, fourteen permanent magnets 16, and a shaft (rotating shaft) 18. The rotor core 14 is formed by, for example, stamping laminated electromagnetic steel plates using a pressing machine. The rotor core 14 has a space that accommodates the fourteen permanent magnets 16 and a through hole for fixing the shaft 18. The space and the through hole are extended in the lamination direction of the electromagnetic steel plates. The permanent magnets 16 accommodated in the space are provided in the rotor core 14. If the rotating machine 10 is a motor, the motor having the above rotor 12 is called an IPM (Interior Permanent Magnet) motor.

The shaft 18 is fixed in the through hole formed at the center of the rotor core 14. The shaft 18 has bearings (not shown) that are attached on two sides of the rotor core 14. The bearing is supported by a support section (not shown) provided on the stator 20. The shaft 18 acts as a rotating shaft and the rotor 12 rotates about the shaft 18. The rotor 12 is similar to a rotor included in a motor or a generator that has already been in practical use. Thus, other explanations on the rotor 12 are omitted. In the present embodiment, a direction along the direction of rotation of the rotor 12 ("rotation direction", see "arrow" near the shaft 18 in FIG. 1) will be called "circumferential direction". The circumferential direction is a concept including the rotation direction and the opposite direction about the shaft 18 serving as a rotating shaft. In the rotating machine 10, the direction of radiation relative to the shaft 18 serving as a rotating shaft will be called "radial direction".

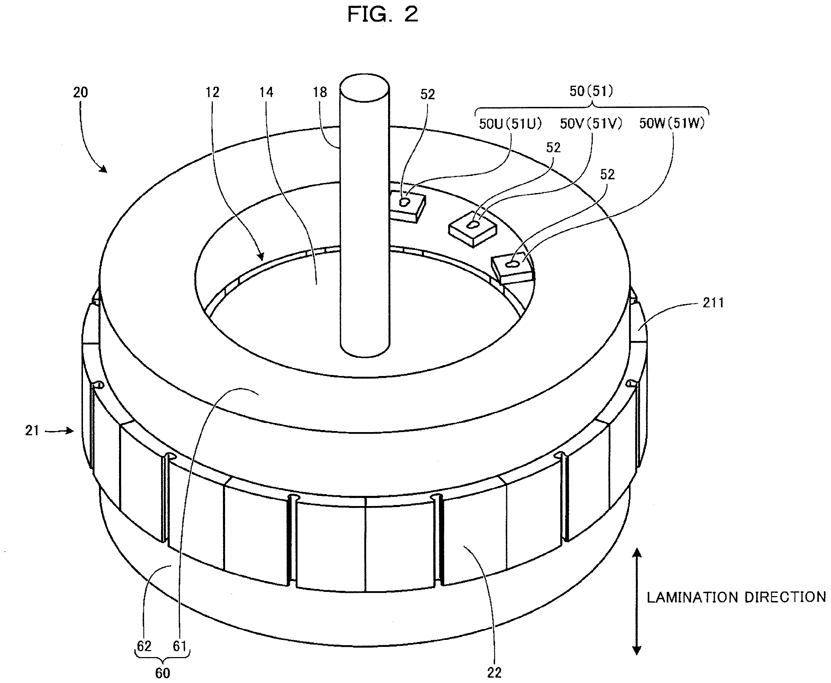

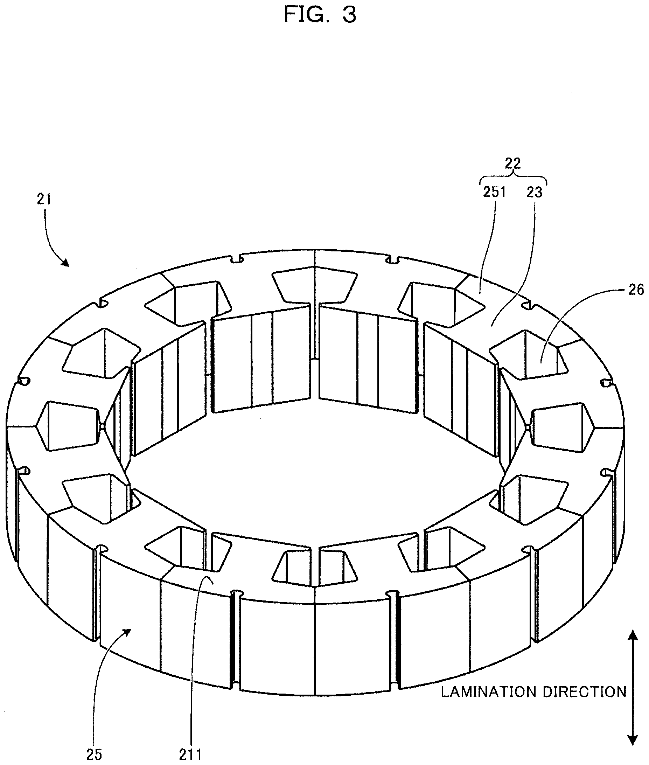

The stator 20 is resin-molded. As shown in FIGS. 1 and 2, the stator 20 includes a stator core 21, coils 30, terminals 50U, 50V, and 50W, and a molded section 60. In FIG. 1, the molded section 60 is not shown and the coils 30 are shown wound around tooth sections 23. Moreover, in FIG. 1, the terminals 50U, 50V, and 50W are not shown. In FIG. 2, the lamination of the electromagnetic steel plates is not shown (also in FIG. 3) and the permanent magnets 16 on the rotor 12 are not shown. As shown in FIG. 3, the stator core 21 includes the tooth sections 23 and a plurality of yoke sections 25. In the present embodiment, the stator 20 including the twelve slots has the twelve tooth sections 23. The twelve tooth sections 23 protrude from the yoke sections 25 to the rotor 12 (shaft 18).

As shown in FIG. 3, the stator core 21 is formed by circularly arranging a plurality of stator core segments (hereinafter, will be called "segments") 22. In the present embodiment, the segments 22 include the respective tooth sections 23 and thus the stator core 21 is formed by circularly arranging the twelve segments 22. As shown in FIG. 3, the segment 22 includes the tooth section 23 and a yoke part 251. The yoke part 251 forms a part of the annular yoke section 25. A slot section 26 is formed between the two adjacent tooth sections 23 of the circularly arranged segments 22. The segment 22 is formed by, for example, stamping laminated electromagnetic steel plates to have a shape as in FIG. 3 using a pressing machine.

The coils 30 are formed by concentrated winding of conductors around the tooth sections 23. The coils 30 are formed using a predetermined coil winder. In the formation (winding) of the coils 30 with the coil winder, the conductor is wound around the tooth section 23 of the target segment 22 before the segments 22 are circularly arranged. During the winding, an insulator 34 is attached to the segment 22 (see FIG. 1). The insulator 34 can insulate the segment 22 (stator core 21) from the coil 30.

The stator core 21 composed of the divided segments 22 and the coils 30 wound around the tooth sections 23 may be formed according to practical techniques. Thus, other explanations thereof are omitted.

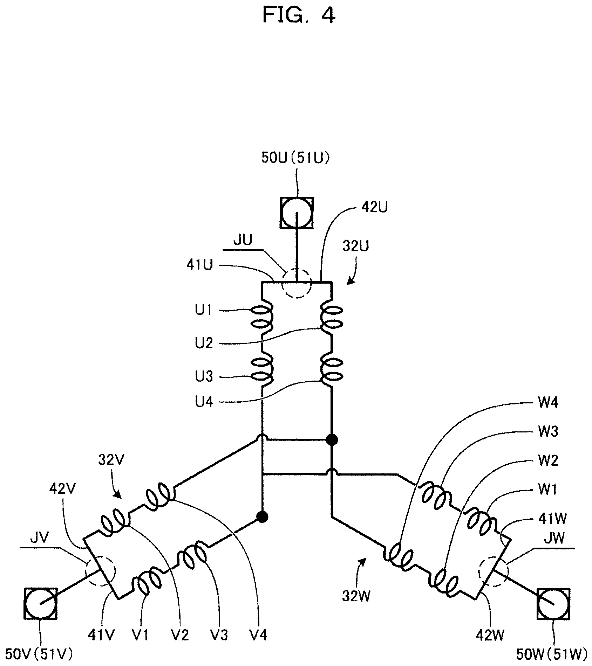

As shown in FIG. 4, the twelve coils 30 included in the stator 20 are categorized as U-phase, V-phase, and W-phase coils 30 in star connection. Predetermined four coils U1, U2, U3, and U4 of the twelve coils 30 form a U-phase gang coil 32U. Another four coils V1, V2, V3, and V4 of the twelve coils 30 form a V-phase gang coil 32V. Still another four coils W1, W2, W3, and W4 of the twelve coils 30 form a W-phase gang coil 32W.

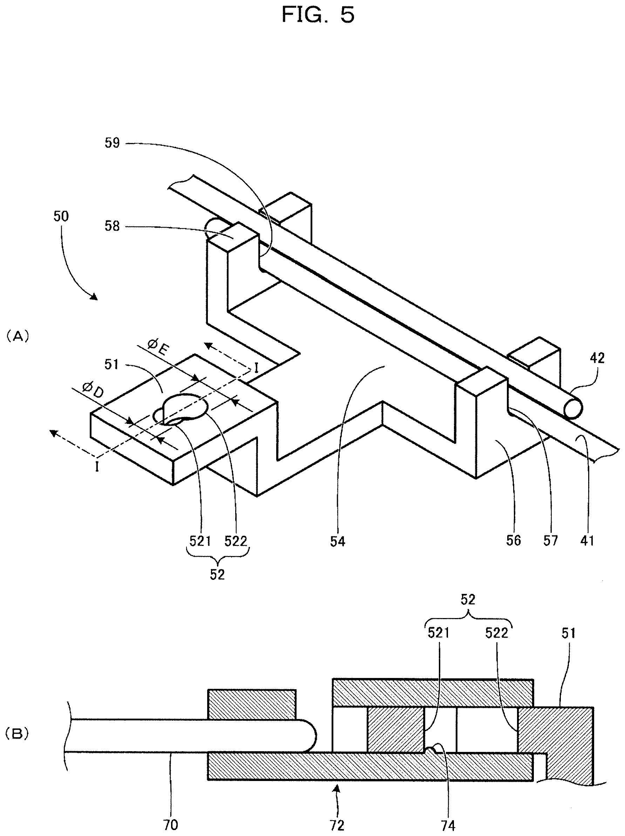

In the formation of the gang coil 32U, the terminal 50U (may be terminals 50V and 50W, see an overall configuration in FIG. 5) is used for connecting (coupling) a first drawn-out wire section 41U and a second drawn-out wire section 42U at a "JU" section shown in FIG. 4. In the formation of the gang coil 32V, the terminal 50V is used for connecting (coupling) a first drawn-out wire section 41V and a second drawn-out wire section 42V at a "JV" section shown in FIG. 4. In the formation of the gang coil 32W, the terminal 50W is used for connecting (coupling) a first drawn-out wire section 41W and a second drawn-out wire section 42W at a "JW" section shown in FIG. 4. The first drawn-out wire section 41U continuously connects to the end of a conductor that forms the coil U1 near the terminal 50U. The second drawn-out wire section 42U continuously connects to the end of a conductor that forms the coil U2 near the terminal 50U. The first drawn-out wire section 41V continuously connects to the end of a conductor that forms the coil V1 near the terminal 50V. The second drawn-out wire section 42V continuously connects to the end of a conductor that forms the coil V2 near the terminal 50V. The first drawn-out wire section 41W continuously connects to the end of a conductor that forms the coil W1 near the terminal 50W. The second drawn-out wire section 42W continuously connects to the end of a conductor that forms the coil W2 near the terminal 50W.

In the present embodiment, the first drawn-out wire sections 41U, 41V, and 41W are generally or collectively called "first drawn-out wire section 41", and the second drawn-out wire sections 42U, 42V, and 42W are generally or collectively called "second drawn-out wire section 42". The terminals 50U, 50V, and 50W are generally or collectively called "terminal 50".

Referring to FIGS. 5(A) and 5(B), the terminal 50 will be described below. As shown in FIG. 5(A), the first drawn-out wire section 41U and the second drawn-out wire section 42U are connected via the terminal 50U, the first drawn-out wire section 41V and the second drawn-out wire section 42V are connected via the terminal 50V, and the first drawn-out wire section 41W and the second drawn-out wire section 42W are connected via the terminal 50W.

The terminal 50 includes an external connection part 51, a base section 54, a first holding section 56, and a second holding section 58 that are integrally formed. Like a known terminal, the terminal 50 is made of an electrical conductive material. The external connection part 51 is connected to a terminal 72 that is provided on a lead wire 70 paired with the terminal 50 (see FIG. 5(B)). The lead wire 70 is connected to an external device on the opposite end of an end where the terminal 72 is provided. The external device is, for example, a power supply, a battery, or a predetermined electric circuit. If the rotating machine 10 is a motor, power from a power supply is inputted to the stator 20 through the lead wire 70 and the external connection part 51. If the rotating machine 10 is a generator, power generated by the rotating machine 10 is charged to a battery or supplied to an electric circuit through the external connection part 51 and the lead wire 70.

As shown in FIG. 2, the terminals 50U, 50V, and 50W are provided such that external connection parts 51U, 51V, and 51W protrude to the shaft 18 above the rotor core 14 on the inner periphery of the stator 20 (a first molded section 61 that will be described later) and in the lamination direction of the stator 20 (toward the end of the shaft 18 in FIG. 2). A part of the terminal 50U except for the external connection part 51U (same as parts of the terminals 50V and 50W including the base section 54, the first holding section 56, and the second holding section 58), a part of the terminal 50V except for the external connection part 51V, and a part of the terminal 50W except for the external connection part 51W are provided in the first molded section 61. The lamination direction is a direction along which the electromagnetic steel plates are laminated in the segment 22 (stator core 21). In the present embodiment, "the external connection part 51" is a generally or collectively called name of the external connection parts 51U, 51V, and 51W in the terminals 50U, 50V, and 50W.

The external connection part 51 has a hole section 52. The hole section 52 includes a first hole section 521 and a second hole section 522. In the example of FIG. 5(A), the hole section 52 is, for example, a through hole outlined such that a circle having a diameter φD and a circle having a diameter φE (φE > φD) partially overlap each other in a radial direction. In other words, the hole section 52 is a through hole outlined like a figure-eight. The first hole section 521 is a hole section corresponding to the circle having the diameter φD while the second hole section 522 is a hole section corresponding to the circle having the diameter φE. The second hole section 522 is wider than the first hole section 521 in the dimension of a circumferential direction.

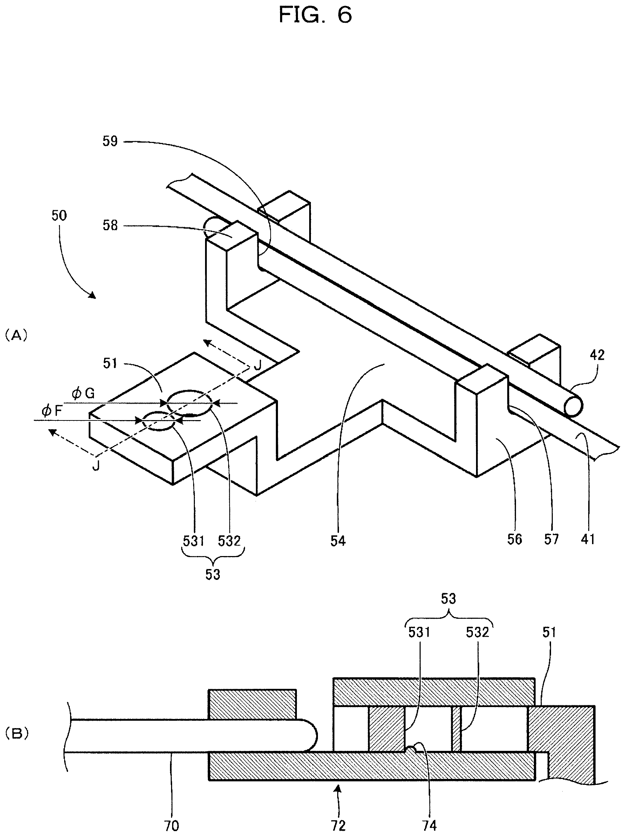

The lead wire 70 includes the terminal 72. If the terminal 50 and the lead wire 70 are connected by attaching the terminal 72 to the external connection part 51, the terminal 72 fit into the external connection part 51 engages the first hole section 521 with a projecting portion 74 provided on the terminal 72 on the outer edge of the first hole section 521 (see FIG. 5(B)). In other words, the first hole section 521 has the function of preventing the terminal 72 from being pulled out of the external connection part 51. In the present embodiment, the terminal 72 is fit from the inside to the outside in a radial direction. The outer edge of the first hole section 521 is engaged with the projecting portion 74 of the terminal 72, on the inner side of the first hole section 521 in the radial direction (see FIG. 5(B)). In FIG. 5(B), the molded section 60 (first molded section 61) is not shown (also in FIG. 6(B), which will be discussed later).

If the terminal 50 and the lead wire 70 are connected (not shown) by joining the lead wire 70 to the external connection part 51, the end of the lead wire 70 is inserted into the first hole section 521 or the second hole section 522. For example, the end of the lead wire 70 inserted into the first hole section 521 or the second hole section 522 is soldered to the external connection part 51. Whether to insert the end of the lead wire 70 into the first hole section 521 or the second hole section 522 is properly selected according to the diameter of the lead wire 70. If the lead wire 70 has a small diameter, the first hole section 521 is used. If the lead wire 70 has a large diameter, the second hole section 522 is used.

The base section 54 continuously connects to the external connection part 51 and is integrated with the first holding section 56 and the second holding section 58. As shown in FIG. 5(A), the first holding section 56 is formed on one end of the base section 54 so as to be raised perpendicularly to the base section 54. The first holding section 56 has a first groove section 57. As shown in FIG. 5(A), the second holding section 58 is formed on the other end of the base section 54 so as to be raised in the same direction as the first holding section 56 with respect to the base section 54. The second holding section 58 has a second groove section 59.

In the stator 20, the terminal 50 is provided near a first end face 211 of the stator core 21. For example, the terminal 50 is provided at a predetermined position on the insulator 34 attached to the segment 22 near the first end face 211. At this point, the first holding section 56 and the second holding section 58 are raised in the same direction as the lamination direction. With respect to the lamination direction from a second end face (not shown) to the first end face 211 of the stator core 21, the terminal 50 is provided such that the bottoms of the first groove section 57 and the second groove section 59 are located near the second end face while the openings of the first groove section 57 and the second groove section 59 are located near the first end face 211.

In the first groove section 57 and the second groove section 59, the first drawn-out wire section 41 and the second drawn-out wire section 42 are attached while overlapping each other (see FIG. 5(A)). For example, as shown in FIG. 5(A), the first drawn-out wire section 41 and the second drawn-out wire section 42 are attached to the first groove section 57 and the second groove section 59 such that the first drawn-out wire section 41 is located at the bottoms of the first groove section 57 and the second groove section 59 while the second drawn-out wire section 42 is located at the openings of the first groove section 57 and the second groove section 59. The order of overlapping of the wire sections may be different from that based on FIG. 5(A).

The first holding section 56 and the second holding section 58 hold the first drawn-out wire section 41 and the second drawn-out wire section 42 by crimping or the like in a state in which the first drawn-out wire section 41 and the second drawn-out wire section 42 are attached to the first groove section 57 and the second groove section 59. Specifically, the first holding section 56 and the second holding section 58 are crimped by, for example, fusing. Fusing is a technique that has already been in practical use and thus explanation thereof is omitted.

The gang coils 32U, 32V, and 32W of the respective phases are connected near a neutral point (see two "black dots" shown in FIG. 4) by the same configuration and method as the stator of a rotating machine that has already been in practical use. For example, the connection near the neutral point is made using a predetermined crimp terminal or soldering and so on. Other description with respect to the connection near the neutral point is omitted.

The molded section 60 is formed by resin molding. The molded section 60 is made of resins such as a thermosetting resin. For example, the molded section 60 is composed of a BMC (Bulk Molding Compound). In the resin molding, the coils 30 are formed on all the segments 22 and then the segments 22 are shaped like a ring. Furthermore, the twelve segments 22 with the connected coils 30 are set in a molding die provided in a molding machine for resin molding.

As shown in FIG. 2, the molded section 60 includes the first molded section 61 and a second molded section 62. The resin forming the molded section 60 is also filled into the slot sections 26 accommodating the coils 30, obtaining insulation between the coils 30 wound around the adjacent tooth sections 23 accommodated in the same slot section 26 by concentrated winding. The molded section 60 including these sections is integrally formed by resin molding.

The first molded section 61 is provided near the first end face 211 of the stator core 21 in the lamination direction so as to cover the coil end sections (see "coil 30 part" shown in FIG. 1) of the coils 30 near the first end face 211. As has been discussed, the external connection parts 51U, 51V, and 51W on the inner periphery of the first molded section 61 protrude toward the shaft 18. In the terminals 50U, 50V, and 50W, parts other than the external connection parts 51U, 51V, and 51W are provided while overlapping the coil end sections in the lamination direction in the first molded section 61. The second molded section 62 is provided near the second end face of the stator core 21 in the lamination direction so as to cover the coil end sections (not shown) of the coils 30 near the second end face.

### <Effect of the present embodiment>

The following effect can be obtained according to the present embodiment.
(1) The external connection part 51 of the terminal 50 is protruded from the first molded section 61 toward the shaft 18 and is disposed in a space formed above the rotor core 14 in the lamination direction on the inner periphery of the stator 20 (see FIG. 2). Thus, the external connection part 51 connected to the lead wire 70 does not protrude from the outer surface of the rotating machine 10, achieving the compact stator 20. This can reduce the size of the rotating machine 10. A space in the rotating machine 10 can be effectively used. The lead wire 70 passes through, for example, a through hole provided on the support section that supports the bearings attached to the shaft 18 and then is drawn out of the rotating machine 10.
(2) The hole section 52 including the first hole section 521 and the second hole section 522 is formed on the external connection part 51 (see FIG. 5(A)). In the hole section 52, the second hole section 522 is set wider than the first hole section 521 in the circumferential direction. Thus, the single terminal 50 is applicable to multiple connecting methods. The single terminal 50 is applicable to the lead wires 70 having multiple diameters. This configuration can properly connect the terminal 50 and the lead wire 70.

### <Modification>

The present embodiment can be configured as below. The following modification may be combined with another modification if necessary.
(1) The foregoing example described the rotating machine 10 (see FIG. 1) including the rotor 12 that has fourteen poles and the stator 20 that has twelve slots. The rotor may have a different number of poles and/or the stator may have a different number of slots. The number of poles of the rotor and/or the number of slots of the stator are properly set in consideration of various conditions such as required performance. The rotor may have permanent magnets on the outer side of the rotor core or may not have permanent magnets. If the rotating machine is a motor, the motor including a rotor with permanent magnets provided on the outer side of a rotor core is referred to as an SPM (Surface Permanent Magnet) motor.
(2) The foregoing example described the stator 20 (see FIGS. 1 and 3) that is formed by circularly arranging the stator core 21 and the segments 22 and includes the coils 30 wound around the tooth sections 23 by concentrated winding. The stator core may be an integral-type stator core. Alternatively, the stator may include the coils wound by a different method from concentrated winding. For example, the stator may include the coils wound by distributed winding or full-pitch winding.
(3) The foregoing example described the integrated hole section 52 (see FIG. 5(A)) including the first hole section 521 and the second hole section 522 that are connected in the radial direction. A hole section formed on the external connection part 51 may be, for example, a hole section 53 shown in FIG. 6(A). The hole section 53 includes a first hole section 531 and a second hole section 532. The first hole section 531 and the second hole section 532 are independently formed on the external connection part 51. The first hole section 531 is a through hole having a diameter φF. The second hole section 532 is a through hole having a diameter φG (φG > φF). The second hole section 532 is wider than the first hole section 531 in a circumferential direction and angularly in a radial direction.
   The first hole section 531 corresponds to the first hole section 521 of the hole section 52 while the second hole section 532 corresponds to the second hole section 522 of the hole section 52. If the terminal 72 is provided on the lead wire 70, the projecting portion 74 of the terminal 72 is engaged with the outer edge of the first hole section 531, preventing the terminal 72 from being pulled out of the external connection part 51 (see FIG. 6(B)). If the lead wire 70 is joined to the external connection part 51 (not shown), the end of the lead wire 70 is inserted into the first hole section 531 or the second hole section 532 and then is joined (for example, by soldering) to the external connection part 51.
   The layout of the first hole section 521 and the second hole section 522 in the hole section 52 or the layout of the first hole section 531 and the second hole section 532 in the hole section 53 may be properly set in consideration of various conditions. For example, the first hole section 521 and the second hole section 522 are circumferentially arranged in the hole section 52. The first hole section 531 and the second hole section 532 may be circumferentially arranged in the hole section 53. If the hole sections are arranged in the radial direction, the second hole section 522 may be located inside the first hole section 521 and the second hole section 532 may be located inside the first hole section 531.
   The first hole section 521 and the second hole section 522 in the hole section 52 and the first hole section 531 and the second hole section 532 in the hole section 53 may have shapes other than circles. The second hole sections 522 and 532 of any shapes are partially wider than the first hole sections 521 and 531 of any shapes in a predetermined direction about the shaft 18 that is a rotating shaft, including the circumferential direction and/or the radial direction. The terminal 50 including the external connection part 51 is applicable to a rotating machine including a stator that is not resin-molded, as well as the rotating machine 10 including the resin-molded stator 20, the external connection part 51 having the hole section 52 including the first hole section 521 and the second hole section 522 or the hole section 53 including the first hole section 531 and the second hole section 532.
(4) The foregoing example described the internally rotating machine 10 (see FIG. 1) including the rotor 12 rotatably supported on the inner periphery of the stator 20. The rotating machine may be an externally rotating machine. The externally rotating machine includes a stator with a plurality of tooth sections radially protruding from a yoke section to the outside. The rotor of the externally rotating machine is opposed to the tooth sections outside the stator.

## Claims

1. A rotating machine (10) comprising:
a rotatably provided rotor (12); and
a resin-molded stator (20),
the stator including:
a stator core (21) formed by laminating steel plates;
a coil (30) provided on the stator core;
a terminal (50) that is connected to a drawn-out wire section (41, 42) continuously connecting to an end of a conductor forming the coil and is connected to a lead wire; and
a molded section (60) that covers a coil end section of the coil near one end face of the stator core in a lamination direction of the laminated steel plates in the stator core,
the terminal having a part connected near the one end face of the stator core to the drawn-out wire section included in the molded section, the terminal including an external connection part (51) protruding from the molded section, the external connection part being connected to the lead wire;
the rotating machine being **characterized in that**
the external connection part protrudes from the molded section toward a rotating shaft of the rotor.

2. The rotating machine according to claim 1, wherein the external connection part of the terminal has a first hole section (521) and a second hole section (522) for the connection of the lead wire,
the second hole section being wider than the first hole section in a predetermined direction with respect to the rotating shaft.

## Patentansprüche

1. Drehende Maschine (10), umfassend:
einen drehbar vorgesehenen Läufer (12), und
einen aus Kunstharz gegossenen Ständer (20),
wobei der Ständer umfasst:
einen Ständerkern (21), der durch das Schichten von Stahlplatten ausgebildet wird,
eine Spule (30), die an dem Ständerkern vorgesehen ist,
einen Anschluss (50), der mit einem herausgezogenen Drahtabschnitt (41, 42) verbunden ist, um eine kontinuierliche Verbindung zu einem Ende eines die Spule bildenden Leiters vorzusehen, und mit einem Anschlussdraht verbunden ist, und
einen gegossenen Abschnitt (60), der einen Spulenendabschnitt der Spule nahe einer Endfläche des Ständerkerns in einer Schichtungsrichtung der geschichteten Stahlplatten in dem Ständerkern bedeckt,
wobei der Anschluss einen Teil umfasst, der in der Nähe der einen Endfläche des Ständerkerns mit dem herausgezogenen Drahtabschnitt in dem gegossenen Abschnitt verbunden ist, wobei der Anschluss einen externen Verbindungsteil (51), der von dem gegossenen Abschnitt vorsteht, umfasst und wobei der externe Verbindungsteil mit dem Anschlussdraht verbunden ist,
wobei die drehende Maschine **dadurch gekennzeichnet ist, dass**:
der externe Verbindungsteil von dem gegossenen Abschnitt zu einer Drehwelle des Läufers vorsteht.

2. Drehende Maschine nach Anspruch 1, **dadurch gekennzeichnet, dass** der externe Verbindungsteil des Anschlusses einen ersten Lochabschnitt (521) und einen zweiten Lochabschnitt (522) für die Verbindung des Anschlussdrahts aufweist,
der zweite Lochabschnitt breiter ist als der erste Lochabschnitt in einer vorbestimmten Richtung in Bezug auf die Drehwelle.

## Revendications

1. Machine tournante (10) comprenant :
un rotor (12) prévu tournant, et
un stator (20) moulé en résine,
le stator incluant :
un noyau de stator (21) formé en stratifiant des plaques d'acier,
un bobinage (30) prévu sur le noyau de stator,
une borne (50) qui est reliée à une section de fil étiré (41, 42) reliée de manière continue à une extrémité de conducteur formant le bobinage, et qui est reliée à un fil conducteur, et
une section moulée (60) qui recouvre une section terminale du bobinage à proximité d'une première face terminale du noyau de stator dans la direction de stratification des plaques d'acier stratifiées dans le noyau de stator,
la borne comportant une pièce reliée, à proximité de la première face terminale du noyau de stator, à la section de fil étiré incluse dans la section moulée, la borne comportant une pièce de connexion externe (51) dépassant de la section moulée, la pièce de connexion externe étant reliée au fil conducteur,
la machine tournante étant **caractérisée en ce que**
la pièce de connexion externe dépasse de la section moulée vers l'axe tournant du rotor.

2. Machine tournante selon la revendication 1, dans laquelle la pièce de connexion externe de la borne comprend une première section formant trou (521) et une seconde section formant trou (522) en vue de la connexion du fil conducteur,
la seconde section formant trou étant plus grande que la première section formant trou dans une direction prédéterminée par rapport à l'axe tournant.
